Europäisches Patentamt

European Patent Office

Office européen des brevets

(19)

(11) **EP 1 317 701 B1**

(12) **FASCICULE DE BREVET EUROPEEN**

(45) Date de publication et mention
de la délivrance du brevet:
**02.03.2005 Bulletin 2005/09**

(21) Numéro de dépôt: **01967463.9**

(22) Date de dépôt: **10.09.2001**

(51) Int Cl.$^{7}$: **G06F 1/00**, G06K 19/073

(86) Numéro de dépôt international:
**PCT/FR2001/002796**

(87) Numéro de publication internationale:
**WO 2002/023312 (21.03.2002 Gazette 2002/12)**

(54) **PROCEDE DE BROUILLAGE DE LA CONSOMMATION ELECTRIQUE D'UN CIRCUIT INTEGRE**

VERFAHREN ZUR VERSCHLEIERUNG DES ENERGIEVERBRAUCHS EINES INTEGRIERTEN
SCHALTKREISES

METHOD FOR JAMMING POWER CONSUMPTION OF AN INTEGRATED CIRCUIT

(84) Etats contractants désignés:
**DE FR GB IT**

(30) Priorité: **14.09.2000 FR 0011696**

(43) Date de publication de la demande:
**11.06.2003 Bulletin 2003/24**

(73) Titulaire: **STMicroelectronics S.A.**
**92120 Montrouge (FR)**

(72) Inventeur: **WUIDART, Sylvie**
**F-83910 Pourrieres (FR)**

(74) Mandataire: **Marchand, André**
**OMNIPAT,**
**24 Place des Martyrs de la Résistance**
**13100 Aix-en-Provence (FR)**

(56) Documents cités:
**WO-A-00/42484**          **FR-A- 2 776 410**

• **KOCHER P ET AL: "DIFFERENTIAL POWER
ANALYSIS" 19TH ANNUAL INTERNATIONAL
CRYPTOLOGY CONFERENCE. SANTA
BARBARA, CA, AUG. 15 - 19, 1999.
PROCEEDINGS,BERLIN: SPRINGER,DE, 1999,
pages 388-397, XP000863414 ISBN:
3-540-66347-9**

**Description**

La présente invention concerne un procédé de brouillage de la consommation électrique d'un circuit intégré, au moins lors de l'exécution par le circuit intégré d'une opération impliquant la lecture de données confidentielles stockées dans le circuit intégré.

La présente invention concerne également un circuit intégré comprenant au moins une mémoire dans laquelle sont stockées des données confidentielles, une pompe de charge et des moyens de calcul aptes à lire les données confidentielles stockées dans la mémoire.

De façon classique, les transactions électroniques faites au moyen d'une carte à puce sont sécurisées grâce à une procédure d'authentification de la carte faisant intervenir un algorithme de cryptographie. Au cours d'une telle procédure d'authentification, le terminal sollicité pour la transaction envoie à la carte un code aléatoire. La carte à puce doit répondre au terminal en produisant un code d'authentification qui est la transformée du code aléatoire par l'algorithme de cryptographie. Le terminal calcule de son côté la transformée du code aléatoire et compare le résultat obtenu avec celui renvoyé par la carte. Si le code d'authentification renvoyé par la carte est valable, la transaction est autorisée.

Dans le circuit intégré d'une carte à puce, l'algorithme de cryptographie est généralement exécuté par un circuit à logique câblée, ou co-processeur de cryptographie, auquel est attribué une clef secrète ou clef de cryptographie qui est stockée dans une zone protégée de la mémoire du circuit intégré. Il est essentiel de garantir une protection absolue de cette clef secrète car les algorithmes de cryptographie mis en oeuvre dans les procédures d'authentification sont en soi connus et seule la clef secrète garantit l'inviolabilité de la procédure d'authentification.

Or, ces dernières années, les techniques de piratage des circuits intégrés sécurisés ont considérablement évolué et mettent aujourd'hui en oeuvre des méthodes d'analyse sophistiquées dites par monitoring de courant, c'est-à-dire basées sur une observation du courant consommé par les éléments d'un circuit intégré lors de la réalisation d'opérations confidentielles. Pour contrer ces méthodes de piratage, on a prévu diverses contre-mesures consistant par exemple à prévoir un signal d'horloge aléatoire, à utiliser des codes factices, à masquer les variations de la consommation électrique... On connaît notamment par la demande EP-A-0 500 461 une méthode anti-piratage consistant à prévoir des résistances agencées en parallèle avec les éléments actifs d'un circuit intégré et alimentées par un générateur de courant. Le générateur de courant et les résistances assurent une consommation de courant constante aux bornes du circuit intégré, qui masque la consommation individuelle des éléments actifs.

Ces méthodes anti-piratage classiques s'avèrent efficaces pour contrer les méthodes d'analyse du type SPA ("Simple Power Analysis"). Elles s'avèrent toutefois insuffisantes pour contrer une méthode d'analyse découverte récemment, appelée analyse DPA ("Differential Power Analysis"), qui permet de découvrir la clef secrète d'un circuit de cryptographie par la seule observation des variations du courant consommé par le circuit de cryptographie, sans qu'il soit nécessaire de lire les données circulant sur le bus interne du circuit intégré et d'identifier les mémoires en cours de lecture. Très schématiquement, une telle méthode repose sur une corrélation d'échantillons de courant consommé en relation avec un modèle mathématique du circuit de cryptographie et des hypothèses sur la valeur de la clef secrète. La corrélation permet de supprimer la partie continue du courant consommé et de mettre à jour les pics de consommation, qui sont révélateurs des opérations effectuées par le circuit de cryptographie et de la valeur des données confidentielles.

Les documents FR-A-2 776 410, WO 00 42484 A et KOCHER P ET AL: 'DIFFERENTIAL POWER ANALYSIS' 19TH ANNUAL INTERNATIONAL CRYPTOLOGY CONFERENCE. SANTA BARBARA, CA, AUG. 15 - 19, 1999. PROCEEDINGS,BERLIN: SPRINGER,DE, 1999, pages 388-397, XP000863414 ISBN: 3-540-66347-9 décrivent des méthodes de brouillage de la consommation électrique d'un circuit intégré.

Ainsi, la présente invention a pour objectif de prévoir un procédé permettant de contrer une analyse de type DPA, contre laquelle un masquage du courant consommé au moyen d'une source de courant assurant une consommation de courant constante s'avère inefficace.

Cet objectif est atteint de façon simple mais non moins inventive par la prévision d'un procédé de brouillage de la consommation électrique d'un circuit intégré comme défini dans la revendication 1.

Selon un mode de réalisation, la pompe de charge est également activée lors de l'enregistrement de données dans une mémoire programmable et effaçable électriquement, afin de produire une haute tension de programmation et/ou effacement de la mémoire.

La présente invention concerne également un circuit intégré défini dans la revendication 3.

Selon un mode de réalisation, le circuit intégré comprend une mémoire du type programmable et effaçable électriquement, caractérisé en ce que la pompe de charge est également activée lors de l'enregistrement de données dans la mémoire, pour produire une haute tension de programmation et/ou effacement de la mémoire.

Selon un mode de réalisation, le circuit intégré est agencé sur un support portable pour former une carte à puce ou tout autre objet portable électronique équivalent.

Ces objets, caractéristiques et avantages ainsi que d'autres de la présente invention seront exposés plus en détail dans la description suivante du procédé de l'invention et d'un circuit intégré selon l'invention, en relation avec les figures jointes parmi lesquelles :

- la figure 1 représente sous forme de bloc un exemple d'architecture classique de circuit intégré pour carte à puce,
- la figure 2 illustre la mise en oeuvre du procédé de l'invention dans le circuit intégré de la figure 1,
- les figures 3A à 3D illustrent le procédé de l'invention et représentent des courbes de signaux électriques apparaissant dans un circuit intégré selon l'invention,
- la figure 4 représente sous forme de bloc un exemple de réalisation d'un circuit survolteur comportant une pompe de charge, et
- la figure 5 représente la structure d'une pompe de charge.

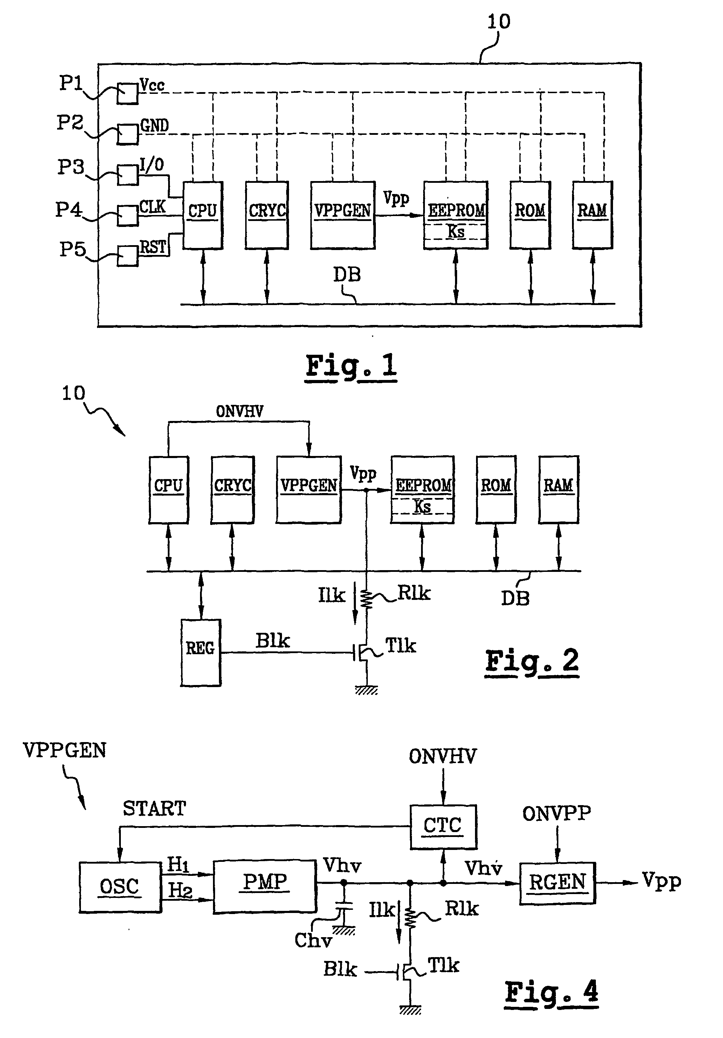

La figure 1 représente schématiquement l'architecture classique d'un circuit intégré 10 pour carte à puce, ici du type microcontrôleur. Le circuit intégré 10 comprend des plages de contact P1 à P5, une unité centrale de traitement CPU, un circuit de cryptographie CRYC, par exemple un circuit 3DES, une mémoire morte ROM dans laquelle est stocké le système d'exploitation de l'unité centrale CPU, une mémoire vive RAM pour stocker des données temporaires et une mémoire programmable et effaçable électriquement EEPROM pour stocker un ou plusieurs programmes-applications. La mémoire EEPROM comprend également une zone protégée dans laquelle est stockée la clef secrète Ks du circuit de cryptographie CRYC. Le circuit intégré 10 comprend également un circuit survolteur VPPGEN comportant une pompe de charge, pour délivrer une haute tension Vpp de programmation et/ou effacement de la mémoire EEPROM lorsque des données doivent être enregistrées dans cette mémoire. La haute tension Vpp est classiquement de l'ordre de 12 à 17 V pour une tension d'alimentation Vcc de l'ordre de 3 à 5 V. L'unité CPU, le circuit CRYC et les mémoires EEPROM, ROM et RAM sont connectés à un bus de données commun DB. La plage P1 est une plage d'alimentation recevant une tension d'alimentation Vcc et la plage P2 est une plage de masse recevant un potentiel de masse GND. Les plages P3 à P5 sont par exemple des plages d'entrée/sortie I/O, d'horloge CLK et de remise à zéro RST prévues par la norme ISO 7816.

Comme on l'a indiqué au préambule, un tel circuit intégré 10 est susceptible de ne pas résister à une "attaque" faite par analyse DPA, visant à déterminer la clef de cryptographie Ks stockée dans la zone protégée de la mémoire EEPROM. Une telle attaque peut intervenir au cours d'une procédure d'authentification, lorsque l'unité CPU active le circuit de cryptographie CRYC pour que ce dernier calcule la transformée d'un code aléatoire fourni par un terminal. Pendant cette opération, la clef secrète de cryptographie Ks est lue dans la mémoire EEPROM et une mesure des pics du courant consommé par le circuit de cryptographie CRYC peut permettre, en combinaison avec un modèle mathématique du circuit CRYC et diverses hypothèses sur la valeur de la clef secrète Ks, de retrouver cette clef secrète. Plus particulièrement, une telle attaque DPA peut se produire en pratique :

- pendant la lecture de la clef secrète Ks par le circuit de cryptographie CRYC (la clef secrète étant ensuite stockée temporairement dans un registre privé du circuit de cryptographie), ou
- pendant le calcul du code de cryptographie, ou
- de façon cumulée, pendant la réalisation des deux opérations susmentionnées.

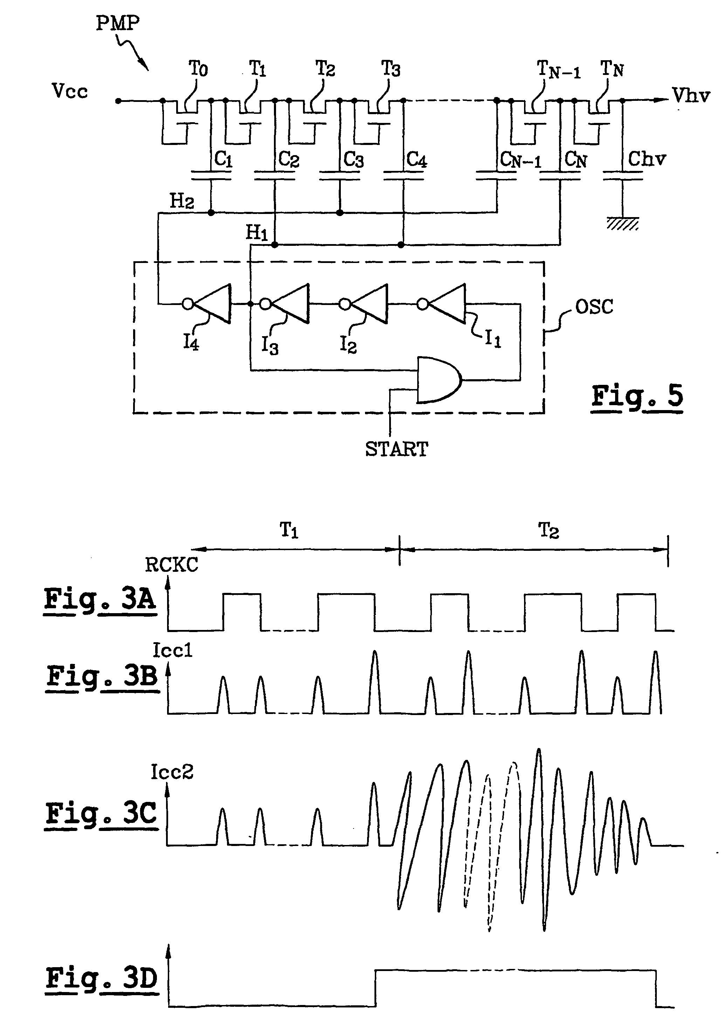

Selon le procédé de l'invention, illustré en figure 2, l'activation du circuit CRYC est précédée de l'activation de la pompe de charge du circuit survolteur VPPGEN, par exemple au moyen d'un signal d'activation ONVHV délivré par l'unité CPU. L'activation de la pompe de charge du circuit survolteur VPPGEN engendre un "bruit" de consommation de courant important sur la ligne d'alimentation reliant la plage P1 aux divers éléments du circuit intégré (fig. 1), et masque les pics de consommation dus à l'activité du circuit CRYC, de sorte que leur synchronisation par analyse DPA devient impossible.

De préférence, on s'arrange en outre pour provoquer une fuite de courant dans le circuit VPPGEN afin de faire fonctionner à plein régime la pompe de charge. De cette manière, le bruit généré par la pompe est maximal. Une telle fuite de courant peut être obtenue au moyen d'un interrupteur Tlk connecté à la sortie ou à un noeud interne du circuit survolteur par l'intermédiaire d'une résistance Rlk. L'interrupteur Tlk est par exemple un transistor MOS et la résistance Rlk est par exemple la résistance drain-source du transistor Tlk. La grille du transistor Tlk est pilotée par un bit de contrôle Blk stocké dans un registre REG. Le bit de contrôle Blk est mis à 1 après l'activation de la pompe de charge, pendant les périodes de brouillage, de sorte qu'un courant de fuite Ilk traverse la résistance Rlk et le transistor Tlk.

La réalisation d'une opération confidentielle comprend ainsi, selon l'invention, la séquence suivante :

1) activation du circuit survolteur VPPGEN,
2) activation de la fuite (mise à 1, par l'unité CPU, du bit Blk dans le registre REG),
3) réalisation de l'opération confidentielle (lecture de données confidentielles et/ou calcul cryptographique),
4) désactivation de la fuite (mise à 0 du bit Blk),
5) désactivation du circuit survolteur VPPGEN.

Les figures 3A à 3D illustrent l'effet du procédé de l'invention sur la consommation électrique du circuit intégré. La figure 3A représente un signal d'horloge aléatoire RCLK généré dans le circuit intégré 10 en tant que premier moyen de brouillage. La figure 3B représente le courant consommé Icc1 par le circuit intégré en l'absence du procédé de l'invention. La figure 3B représente le courant Icc2 consommé par le circuit intégré lorsque le procédé de l'invention est mis en oeuvre. La figure 3D représente le bit de contrôle de fuite Blk. Sur ces figures, on distingue une période T1 au cours de laquelle l'unité CPU exécute des séquences de programme non sensibles au cours desquelles des données confidentielles ne sont pas mises en jeu, et une période T2 au cours de laquelle des données confidentielles sont manipulées. La période T2 est par exemple une période d'activité du circuit CRYC.

Sur la figure 3B, le courant consommé Icc1 présente pendant les périodes T1 et T2 des pics de consommation synchronisés aux fronts montants et/ou descendants du signal d'horloge aléatoire RCLK. Au cours de la période T2, un relevé de ces pics de consommation peut permettre de procéder à une analyse DPA visant à déterminer la valeur des données confidentielles.

Selon le procédé de l'invention, la pompe de charge est activée et le bit de contrôle de fuite Blk est mis à 1 (figure 3D) au plus tard au commencement de la période T2. Comme on le voit en comparant les figures 3B et 3C, les pics de consommation (fig. 3B) liés à la lecture des données confidentielles et au calcul du code de cryptographie sont noyés dans un bruit de fond important (fig. 3C) dû à la consommation de la pompe de charge. Cette consommation présente un profil en dents de scie en raison de la structure même d'une pompe de charge, qui sera rappelée plus loin.

La figure 4 représente un exemple de réalisation du circuit survolteur VPPGEN. Le circuit VPPGEN comprend un oscillateur OSC délivrant deux signaux d'activation H1, H2 en opposition de phase. Les signaux H1, H2 sont appliqués à une pompe de charge PMP dont la sortie délivre une haute tension Vhv. La haute tension Vhv est appliquée à l'anode d'une capacité de stabilisation Chv et à l'entrée d'un générateur de rampe RGEN dont la sortie délivre la tension Vpp destinée à être appliquée à la mémoire EEPROM. Le transistor de fuite Tlk est relié ici à la sortie de la pompe de charge, en parallèle avec la capacité de stabilisation Chv.

L'oscillateur OSC est contrôlé par un signal START délivré par un circuit CTC qui surveille la tension Vhv. Le circuit CTC active l'oscillateur OSC en portant à 1 le signal START lorsque la tension Vhv est inférieure à une valeur nominale prédéterminée, et désactive l'oscillateur lorsque la tension Vhv est supérieure ou égale à cette valeur. Le circuit CTC est lui-même contrôlé par le signal ONVHV décrit plus haut et le générateur de rampe RGEN est contrôlé par un signal ONVPP délivré par l'unité CPU.

On distingue le fonctionnement du circuit VPPGEN en mode programmation et/ou effacement de la mémoire EEPROM et en mode brouillage de consommation électrique.

En mode programmation et/ou effacement, les signaux ONVHV et ONVPP sont mis à 1 successivement et le bit de contrôle de fuite Blk reste à 0. Lorsque le signal ONVHV passe à 1, la capacité Chv est déchargée et le circuit CTC active l'oscillateur OSC pour le démarrage de la pompe de charge. La capacité Chv se charge jusqu'à ce que la tension Vhv atteigne sa tension nominale. Lorsque le signal ONVPP passe ensuite à 1, la sortie du générateur RGEN délivre progressivement la tension Vpp sous la forme d'une rampe suivie d'un plateau sensiblement égal à Vhv. Comme cela est bien connu de l'homme de l'art, l'application progressive de la haute tension Vpp permet de préserver les cellules mémoire de la mémoire EEPROM et d'augmenter leur durée de vie.

En mode brouillage de consommation, le signal ONVHV et le bit Blk sont mis à 1 et le signal ONVPP reste à 0, de sorte que la haute tension n'est pas appliquée à la mémoire EEPROM, qui doit rester disponible en lecture. Le courant de fuite Ilk empêche la tension Vhv d'atteindre sa valeur nominale et le circuit CTC maintient l'oscillateur OSC activé, de sorte que le bruit généré par la pompe de charge est permanent.

Ce mode de réalisation d'un circuit survolteur utilisable pour la mise en oeuvre du procédé de l'invention est bien entendu susceptible de diverses variantes de réalisation. Ainsi, dans certains circuits intégrés, l'oscillateur OSC est directement contrôlé par le signal ONVHV et un régulateur de tension (par exemple à diode Zener) est agencé entre la sortie de la pompe de charge PMP et le générateur de rampe RGEN. Dans ces conditions, la pompe de charge est toujours active lorsque le signal ONVHV est à 1 et la prévision d'un courant de fuite n'est pas nécessaire pour garantir l'activation permanente de cette dernière. Un courant de fuite peut toutefois être prévu afin d'augmenter la consommation de courant dans la pompe de charge et amplifier le bruit sur la ligne d'alimentation.

D'autre part, il va de soi que deux pompes de charge pourraient être prévues, l'une pour la mise en oeuvre du procédé de l'invention et l'autre pour générer la tension d'effacement et/ou programmation d'une mémoire EEPROM.

A titre de rappel, la figure 5 représente un exemple de réalisation classique de la pompe de charge PMP et de l'oscillateur OSC. La pompe de charge comprend une pluralité de capacités en cascade, par exemple N capacités C1 à CN. L'anode de chaque capacité C1, C2,...CN-1 est reliée à l'anode de la capacité suivante C2, C3,...CN par l'intermédiaire de transistors MOS T1 à TN-1 agencés en diodes (grille connectée au drain). A l'entrée de la pompe de charge, la capacité C1 reçoit la tension d'alimentation Vcc par l'intermédiaire d'un transistor-diode T0. En bout de chaîne, un transistor-diode TN relie l'anode de la capacité CN à l'anode de la capacité de stabilisation Chv, dont la cathode est à la masse. Les cathodes des capacités de rang pair C2, C4,... reçoivent le signal H1 délivré par l'oscillateur OSC et les cathodes des capacités de rang impair C1, C3,... reçoivent le signal H2. Ainsi, alternativement, chaque capacité de rang impair C1, C3,... se décharge dans la capacité suivante de rang pair C2, C4..., et chaque capacité de rang pair C2, C4,... se décharge dans la capacité suivante de rang impair C3, C5,... En bout de chaîne, la capacité CN se décharge dans la capacité Chv aux bornes de laquelle on trouve la haute tension Vhv, égale à :

$$(1) \qquad Vhv = N\ VH - (VT1 + VT2 + VT3 + ....VTN)$$

VT1, VT2,....VTN étant les tensions de seuil des transistors-diodes T1 à TN et VH l'amplitude des signaux H1, H2.

L'oscillateur OSC comprend ici trois portes inverseuses I1, I2, I3 en cascade, la sortie de la porte I3 étant ramenée sur l'entrée de la porte I1 par l'intermédiaire d'une porte ET recevant sur son autre entrée le signal START. Le signal H1 est prélevé à la sortie de la porte I3 et le signal H2 est délivré par une porte inverseuse I4 recevant en entrée le signal H1. Lorsque le signal START passe à 1, la porte ET devient transparente, l'oscillateur OSC démarre et la pompe de charge PMP est activée. En raison de sa structure, une telle pompe de charge est productrice d'un "bruit" de consommation important, dont on tire parti selon l'invention pour procéder au brouillage du courant consommé pendant la réalisation d'opérations confidentielles.

## Revendications

1. Procédé de brouillage de la consommation électrique d'un circuit intégré (10), au moins lors de l'exécution par le circuit intégré d'une opération confidentielle (T2) comprenant la lecture de données confidentielles (Ks) stockées dans le circuit intégré et/ou le calcul d'un code de cryptographie, comprenant, pendant l'exécution de l'opération confidentielle, l'activation d'une pompe de charge (PMP), **caractérisé en ce qu'**il comprend en outre le fait de provoquer une fuite de courant (Ilk) dans la pompe de charge (PMP) au moyen d'un interrupteur (Tlk) dont l'état ouvert ou fermé est fonction de la valeur d'une donnée (Blk) chargée dans un registre (REG), de manière à générer sur la ligne d'alimentation électrique du circuit intégré des fluctuations de consommation électrique (Icc2) d'une intensité suffisante pour masquer les variations de consommation électrique liées à l'exécution de l'opération confidentielle.

2. Procédé selon la revendication 1, dans lequel la pompe de charge (PMP) est également activée lors de l'enregistrement de données dans une mémoire programmable et effaçable électriquement (EEPROM), afin de produire une haute tension (Vpp) de programmation et/ou effacement de la mémoire.

3. Circuit intégré (10) comprenant au moins une mémoire (EEPROM) dans laquelle sont stockées des données confidentielles (Ks), une pompe de charge (PMP) et des moyens de calcul (CRYC) aptes à lire les données confidentielles stockées dans la mémoire, comprenant des moyens (CPU, ONVH) pour activer la pompe de charge au moins lors de l'exécution d'une opération confidentielle (T2) comprenant la lecture des données confidentielles (Ks) et/ou le calcul d'un code de cryptographie par des moyens de cryptographie (CRYC),
   **caractérisé en ce qu'**il comprend :

   - un interrupteur (Tlk) pour provoquer une fuite de courant dans la pompe de charge (PMP) de manière à générer sur la ligne d'alimentation électrique du circuit intégré des fluctuations de consommation électrique (Icc2) d'une intensité suffisante pour masquer les variations de consommation électrique liées à l'exécution de l'opération confidentielle,
   - un registre (REG) pour recevoir une donnée (Blk) qui détermine l'état ouvert ou fermé de l'interrupteur, et
   - des moyens (CPU) pour placer l'interrupteur dans l'état fermé et provoquer la fuite de courant dans la pompe de charge au moins lors de l'exécution de l'opération confidentielle (T2).

4. Circuit intégré (10) selon la revendication 3, comprenant une mémoire (EEPROM) du type programmable et effaçable électriquement, **caractérisé en ce que** la pompe de charge (PMP) est également activée lors de l'enregistrement de données dans la mémoire, pour produire une haute tension (Vpp) de programmation et/ou effacement de la mémoire.

5. Circuit intégré selon l'une des revendications 3 et 4, **caractérisé en ce qu'**il est agencé sur un support portable pour former une carte à puce ou tout autre objet portable électronique équivalent.

## Patentansprüche

1. Verfahren zum Verschleiern des Stromverbrauchs eines integrierten Schaltkreises (10) zumindest bei der Ausführung einer vertraulichen Operation (T2) durch den integrierten Schaltkreis, umfassend das Lesen vertraulicher Daten (Ks), die in dem integrierten Schaltkreis gespeichert sind und/oder die Berechnung eines Kryptographiecodes, der während der Ausführung der vertraulichen Operation das Aktivieren einer Ladepumpe (PMP) umfasst, **dadurch gekennzeichnet, dass** es ferner die Tatsache umfasst, ein Stromleck (Ilk) in der Ladepumpe (PMP) mittels eines Schalters (Tlk) zu verursachen, dessen offener oder geschlossener Zustand von dem Wert einer Information (Blk) abhängt, die in ein Register (REG) geladen ist, so dass auf der Stromversorgungsleitung des integrierten Schaltkreises Schwankungen des Stromverbrauchs (Icc2) mit einer ausreichenden Stärke erzeugt werden, um die Schwankungen des elektrischen Stromverbrauchs in Zusammenhang mit der Ausführung der vertraulichen Operation zu verbergen.

**2.** Verfahren nach Anspruch 1, bei dem die Ladepumpe (PMP) auch bei dem Aufzeichnen von Daten in einem elektrisch programmierbaren und löschbaren Speicher (EEPROM) aktiviert wird, um eine Hochspannung (Vpp) zum Programmieren und/ oder Löschen des Speichers zu erzeugen.

**3.** Integrierter Schaltkreis (10), der mindestens einen Speicher (EEPROM) umfasst, in dem vertrauliche Daten (Ks) gespeichert sind, eine Ladepumpe (PMP) und Rechenmittel (CRYC), die vertrauliche Daten lesen können, die in den Speicher gespeichert sind, mit Mitteln (CPU, ONVH), um die Lastpumpe zumindest bei dem Ausführen einer vertraulichen Operation (T2) zu aktivieren, die das Lesen der vertraulichen Daten (Ks) und/oder die Berechnung eines Kryptographiecodes durch Kryptographiemittel (CRYC) umfasst,
**dadurch gekennzeichnet, dass** er Folgendes umfasst:

- einen Schalter (Tlk), um ein Stromleck in der Ladepumpe (PMP) zu verursachen, so dass auf der elektrischen Stromversorgungsleitung des integrierten Schaltkreises Schwankungen des Stromverbrauchs (Icc2) mit einer ausreichenden Stärke erzeugt werden, um die Schwankungen des Stromverbrauchs in Zusammenhang mit der Ausführung der vertraulichen Operation zu verbergen,

- ein Register (REG) zum Empfangen einer Information (Blk), die den offenen oder geschlossenen Zustand des Schalters bestimmt, und

- Mittel (CPU), um den Schalter auf den geschlossenen Zustand zu stellen und das Stromleck in der Ladepumpe zumindest bei der Ausführung der vertraulichen Operation (T2) zu verursachen.

**4.** Integrierter Schaltkreis (10) nach Anspruch 3, der einen Speicher (EEPROM) des elektrisch programmierbaren und löschbaren Typs umfasst, **dadurch gekennzeichnet, dass** die Ladepumpe (PMP) auch bei dem Speichern von Daten in den Speicher aktiviert wird, um eine Hochspannung (Vpp) zum Programmieren und/oder Löschen des Speichers zu erzeugen.

**5.** Integrierter Schaltkreis nach einem der Ansprüche 3 und 4, **dadurch gekennzeichnet, dass** er auf einem tragbaren Träger angeordnet ist, um eine Chip-Karte oder jedes andere gleichwertige tragbare elektronische Objekt zu bilden.

**Claims**

**1.** Method for scrambling the current consumption of an integrated circuit (10), at least during execution of a confidential operation (T2) by the integrated circuitcomprising the reading of confidential data (Ks) stored in the integrated circuit and/or the calculation of an encryption code, comprising activating a charge pump (PMP) during execution of the confidential operation, **characterised in that** it also comprises causing a current leakage (Ilk) in the charge pump (PMP) by means of a switch (Tlk) whose ON or OFF state varies according to the value of a datum (Blk) loaded into a register (REG), so as to generate current consumption fluctuations (Icc2) on the electric feeder of the integrated circuit, of an intensity great enough to mask the current consumption variations associated with the execution of the confidential operation.

**2.** Method according to claim 1, in which the charge pump (PMP) is also activated during data recording into an electrically erasable programmable memory (EEPROM), in order to produce a high voltage (Vpp) for programming and/or erasing the memory.

**3.** Integrated circuit (10) comprising at least one memory (EEPROM) in which confidential data (Ks) are stored, one charge pump (PMP) and calculation means (CRYC) able to read the confidential data stored in the memory, comprising means (CPU, ONVH) for activating the charge pump at least during execution of a confidential operation (T2) comprising the reading of the confidential data (Ks) and/ or the calculation of an encryption code using encryption means (CRYC).
**characterised in that** it comprises:

a switch (Tlk) for causing a current leakage in the charge pump (PMP) so as to generate current consumption fluctuations (Icc2) on the electric feeder of the integrated circuit, of an intensity great enough to mask the current consumption variations associated with the execution of the confidential operation,

- a register (REG) for receiving a datum (Blk) which determines the ON or OFF state of the switch, and

- means (CPU) for putting the switch into the OFF state and causing the current leakage in the charge pump at least during execution of the confidential operation (T2).

4. Integrated circuit (10) according to claim 3, comprising an electrically erasable programmable type memory (EEPROM), **characterised in that** the charge pump (PMP) is also activated during data recording in the memory, to produce a high voltage (Vpp) for programming and/or erasing the memory.

5. Integrated circuit according to one of claims 3 and 4, **characterised in that** it is arranged onto a portable support to form a smart card or any other equivalent portable electronic object.

EP 1 317 701 B1

**Fig. 1**

**Fig. 2**

**Fig. 4**

PMP

$V_{cc}$ — $T_0$ $T_1$ $T_2$ $T_3$ $T_{N-1}$ $T_N$ → $V_{hv}$

$C_1$ $C_2$ $C_3$ $C_4$ $C_{N-1}$ $C_N$ $C_{hv}$

$H_2$

$H_1$

OSC

$I_4$ $I_3$ $I_2$ $I_1$

START

**Fig. 5**

$T_1$ $T_2$

RCKC

**Fig. 3A**

Icc1

**Fig. 3B**

Icc2

**Fig. 3C**

**Fig. 3D**